(19) Europäisches Patentamt

European Patent Office

Office européen des brevets

(11) **EP 4 560 973 B1**

(12) **EUROPEAN PATENT SPECIFICATION**

(45) Date of publication and mention of the grant of the patent:
**21.01.2026 Bulletin 2026/04**

(21) Application number: **24214151.3**

(22) Date of filing: **20.11.2024**

(51) International Patent Classification (IPC):
*H04L 9/08* (2006.01)        *H04B 10/70* (2013.01)

(52) Cooperative Patent Classification (CPC):
**H04L 9/0852; H04B 10/70; H04L 9/0858**

(54) **INNOVATIVE QUANTUM KEY DISTRIBUTION TRANSMISSION SYSTEM**

INNOVATIVES QUANTENSCHLÜSSELVERTEILUNGSÜBERTRAGUNGSSYSTEM

SYSTÈME INNOVANT DE TRANSMISSION DE DISTRIBUTION DE CLÉ QUANTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.11.2023 IT 202300024831**

(43) Date of publication of application:
**28.05.2025 Bulletin 2025/22**

(73) Proprietor: **Thales Alenia Space Italia S.p.A. Con Unico Socio**
**00131 Roma (IT)**

(72) Inventors:
• **CATUOGNO, Tommaso**
**00131 Roma (IT)**
• **VERDUCCI, Mattia**
**00131 Roma (IT)**
• **IACURTO, Cristian**
**00131 Roma (IT)**
• **GERALDI, Andrea**
**00131 Roma (IT)**

(74) Representative: **Studio Torta S.p.A.**
**Via Viotti, 9**
**10121 Torino (IT)**

(56) References cited:
**US-B1- 7 502 476**

• **LIU XIAOPENG ET AL: "Twin-Field Quantum Key Distribution Protocol with Heralded Single-Photon Source", 2022 IEEE 12TH INTERNATIONAL CONFERENCE ON ELECTRONICS INFORMATION AND EMERGENCY COMMUNICATION (ICEIEC), IEEE, 15 July 2022 (2022-07-15), pages 94 - 97, XP034158484, ISBN: 978-1-6654-0753-3, [retrieved on 20220728], DOI: 10.1109/ ICEIEC54567.2022.9835076**
• **DARUNKAR BHAGYASHRI ET AL: "Secure satellite communication using multi-photon tolerant quantum communication protocol", PROCEEDINGS OF SPIE, IEEE, US, vol. 9615, 1 September 2015 (2015-09-01), pages 961509 - 961509, XP060061023, ISBN: 978-1-62841-730-2, DOI: 10.1117/12.2188575**

**Description**

## CROSS-REFERENCE TO RELATED APPLICATIONS

This patent application claims priority from Italian patent application no. 102023000024831 filed on November 22, 2023.

## TECHNICAL FIELD OF THE INVENTION

The present invention relates, in general, to a Quantum Key Distribution (QKD) transmission system.

## STATE OF THE ART

Nowadays, Quantum Key Distribution (QKD) systems are one of the most promising solutions for improving security in encrypted communications. A QKD system finds applications transversally in many domains, for example in space infrastructures, wherein the QKD system is used both as a communication service and for encryption of critical data in the Navigation and Observation (e.g., Earth Observation) field.

In general, the term Quantum Key Distribution (QKD) refers to a set of protocols aiming at generating a secret string of bits, called key, among two parties, typically called Alice and Bob, by exploiting the properties of quantum mechanics. The successful realization of a QKD protocol is based on the generation of secret keys comprising a sequence of bits (i.e., 1 or 0) evenly and randomly distributed and whose sequence is only known to Alice and Bob. In particular, QKD protocols are based on typical properties such as

- quantum superposition; and
- impossibility to clone a quantum state with one hundred percent (100%) of fidelity (i.e., no-cloning theorem).

Moreover, a property of QKD protocols is that Alice and Bob can detect the presence of a malicious third party/eavesdropper, typically called Eve, whose aim is to infer the secret key without being noticed. Indeed, the possibility to directly identify an eavesdropper stems from the laws of quantum mechanics which assures that any interaction of a quantum system with an environment alters the state thereof. In particular, the change in quantum state properties can be measured and analysed by Alice and Bob who can choose to stop the protocol if Eve is listening in the communication.

From a theoretical point of view, since the article by Bennett and Brassard published in 1984 wherein they proposed a first QKD protocol called BB84, many protocols have been conceived by exploring different approaches, different functioning principles and different implementation concepts. In this respect, reference can be made to:

- C. H. Bennett and G. Brassard, in International Conference on Computers, Systems & Signal Processing, Bangalore, India, Dec 9-12(1984) pp. 175-17;
- Grünenfelder, Fadri, et al. "Simple and high-speed polarization-based QKD" Applied Physics Letters 112.5 (2018): 051108;
- Bennett, Charles H. "Quantum cryptography using any two nonorthogonal states" Physical review letters 68.21 (1992): 2121; and
- Bennett, Charles H., Gilles Brassard, and N. David Mermin. "Quantum cryptography without Bell's theorem" Physical review letters 68.5 (1992): 557.

Furthermore, several QKD protocols have been proven to be theoretically secure. The research work did not stop at conceiving QKD protocols theoretically secure, but also the experimental conditions under which a QKD can take place were analysed, taking into account non ideal functioning of setups, environmental conditions and real-life scenarios.

In order to classify QKD protocols, two main grouping are usually done, wherein

- the first grouping concerns the type of encoding that is used, namely if an information is encoded in a continuous-valued degree of freedom or in a discrete-valued degree of freedom of a chosen quantum system, giving rise to Continuous Variable (CV) protocols and Discrete Variable (DV) protocols, respectively; nowadays, DV protocols are more advanced than CV protocols, both from a theoretical and an experimental point of view; in particular, DV protocols were the first type of protocol to be experimentally proven and many known QKD systems are based on said DV protocols; and
- the second grouping can be performed depending on the basic functioning principle, namely if a protocol is based on a Prepare and Measure - PM - technique (PM protocol) or on an Entanglement Based - EB - technique (EB protocol).

PM protocols, or "trusted" protocols, imply that one of the parties, for example Alice, generates a classical random string of bits, encodes each bit in the state of a quantum system and sends it to a second party, for example Bob, who in turn measures the encoded bit in order to extract the information encoded by Alice.

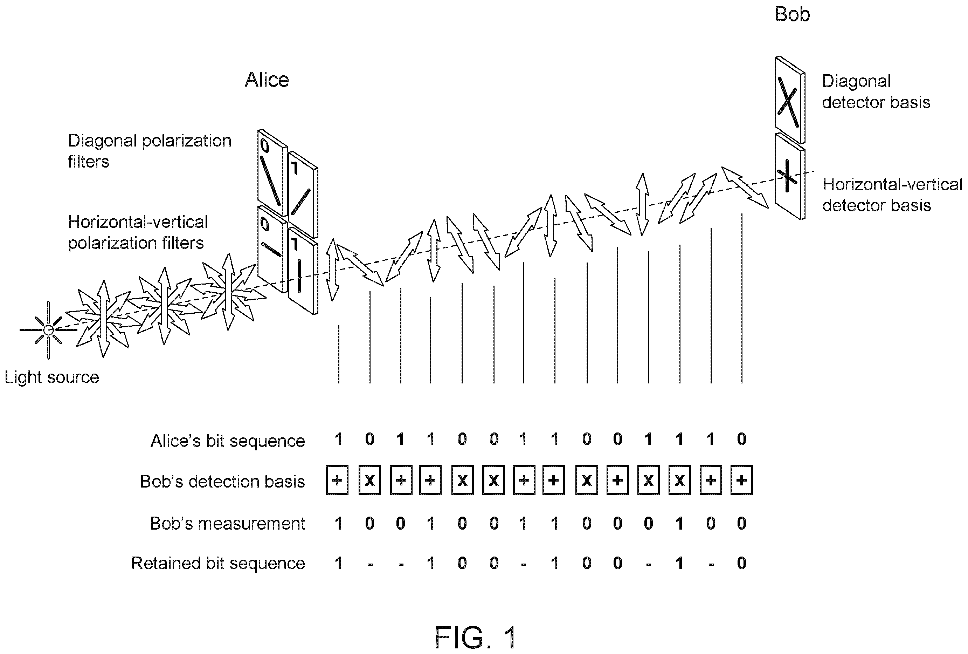

In this connection, Figure 1 schematically illustrates an example of implementation of a PM protocol. In this regard, attention is drawn to the fact that Figure 1 is immediately comprehensible to a expert in the QKD field, thus it is considered superfluous to describe in detail Figure 1.

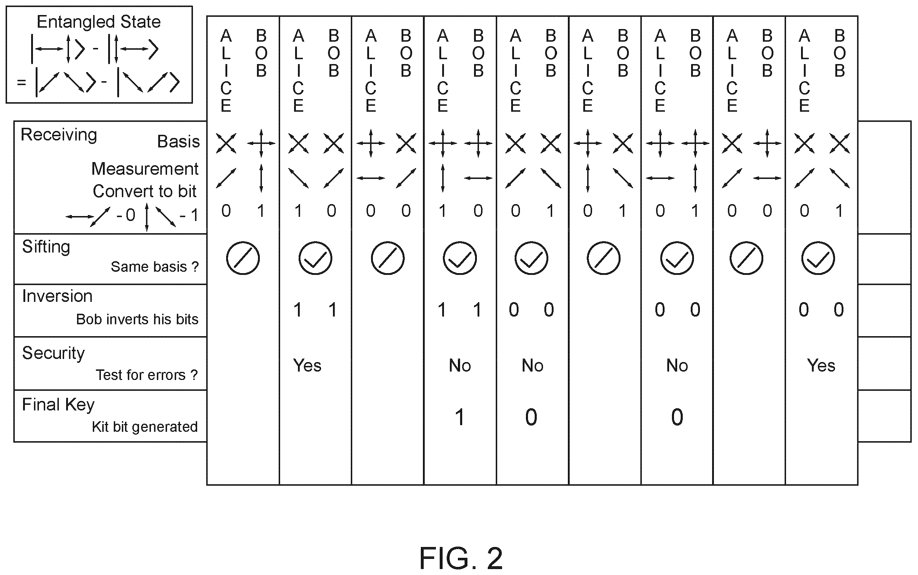

EB protocols, or "untrusted protocols", are based on the entanglement property of quantum mechanics, wherein entangled particles can be described as a system whose parts can't be described independently of each other. In general, protocols based on the entanglement property do not require any preparation step, and it is possible to suppose that the source of the quantum state is in the hands of an eavesdropper without any loss in communication security. In this connection, Figure 2 schematically illustrates an example of implementation of a BBM92 protocol. In this regard, attention is drawn to the fact that Figure 2 is immediately comprehensible to an expert in the QKD field, thus it is considered superfluous to describe in detail Figure 2.

Regardless of the type of implemented protocol, typical realizations of QKD are carried out by encoding information in the degrees of freedom of single photons (wherein, as is known, a photon is the smallest amount of energy of an electromagnetic field), wherein photons are chosen as the encoding quantum system because of their suitability for communication purposes. In particular, in a CV protocol, the quadratures of the electric field are considered as encoding degrees of freedom, while in DV protocols, the encoding degrees of freedom used for QKD are the polarizations of a photon, arrival time of a photon to a detector or a phase difference between two successive photons.

As in known, a non-negotiable property in the realization of QKD systems is that each bit of a secret key must be encoded by only one photon. In fact, if a same bit is encoded by more than one photon, an eavesdropper can steal one of the photons encoding the same bit, extracting the information encoded in the stolen photon without the possibility for Alice and Bob to notice the eavesdropper's presence. Although some countermeasures have been conceived to deal with the possibility of more than one photon encoding a same bit of a secret key, the single-photon requirement must be met, thus making this single-photon requirement one of the main bottlenecks in the realisation of QKD protocols. It's worth noting that photons suffer scattering and high losses during their propagation, in particular in fibre links as fibre propagation undergoes exponential decay due to absorption.

In particular, losses are detrimental for QKD protocols because the no-cloning theorem prevents the quantum state to be copied or amplified during photons' propagation (for example for extending the propagation distance), posing limitations in the realization of QKD protocols in a fibre-based infrastructure. Indeed, no more than few hundreds of km can be covered with fibre-based technology (in this case it can be done with dedicated ultra-low-loss fibres), while, nowadays, is extremely relevant to achieve long distances and wide coverage.

An experimental realisation of a free space and satellite QKD was carried out by a Chinese research group in 2017, achieving high distance reach and wide coverages. However, in the best-case scenario, despite the relative increase in the number of photons that can be successfully exchanged with respect to fibre-based implementation, their absolute value is still limited by the losses which are about 30-40 dB in a typical Low Earth Orbit (LEO) satellite; moreover, the achievable key rate and the key volume in a typical QKD session is limited to tens of kilobits per seconds.

Then, the extremely high relevance of security in communications and the increasing request for cryptographic keys in several applications require smart solutions able to increase the known reachable key rates. In fact, one of the main limitations of QKD systems is the achievable key rate, specifically in networks featured by long distances among users, wherein the key rate is always extremely low and often not compatible with key rates required by users. Currently, the limitation relating to the achievable key rate, that is inherent in a QKD protocol, is commonly accepted a priori, limiting the applicability of a QKD solution in terms of performance and distances achievable.

A realization of a PM protocol is typically based on a pulse technique, wherein a pulsed laser is attenuated down to the level of a single-photon by means of high-performance attenuators. In detail, the number of photons within each pulse follows a Poisson distribution and it is not constant because of light statistical properties. In particular, after the attenuation of the laser pulse, each photon is polarized independently one to the other in order to encode each bit of a secret key in each single-photon-level pulse wherein, because of number of photons' Poisson distribution, there is no certainty that each attenuated laser pulse generates exactly a single photon; typically, the attenuation is such that for the largest part of the pulses no photons are contained in each pulse, but this does not prevent to have, sometimes, more than one photon per pulse, thus posing risks to the security in QKD. A typical way to overcome this limitation is represented by the decoy state method that, in contrast to the standard BB84 protocol, uses pulses containing more than one photon per pulse, wherein, the presence of an eavesdropper is inferred by monitoring the statistic of the arriving pulses. However, despite the decoy state method represents a countermeasure to a photon number splitting attack, the decoy state method can't be implemented by simply increasing the number of transmitted photons per pulse; in fact, the typical average number of photons per pulse is lower than one, whereby it can't increase the communication distance, thus it is clear that the main limitation characterizing QKD implementation is the impossibility to work with multiphoton states.

Nowadays, typical commercial systems are being developed to overcome the limitations described above but their application to real life scenarios is limited by propagation losses.

In recent years, several patents have been granted for inventions facing the above problem; for example, reference can be made to US 9,294,191 B2, US 7,831,050 B2 and US 10,348,493 B2.

United States patent US 7,502,476 B1 discloses systems for and a method of enhancing the security of a QKD system through the use of correlated photon pulses from a heralded photon source.

X. Liu et a1: "Twin-Field Quantum Key Distribution Protocol with Heralded Single-Photon Source", and B. Darunkar et a1: "Secure satellite communication using multi-photon tolerant quantum communication protocol" disclose background prior art on QKD with multi-photon light sources.

From a theoretical point of view, QKD has been proven to be information-theoretic secure, therefore it guarantees that an eavesdropper does not get any information correlated to the secret key, except with negligible probability.

In general, quantum mechanics predicts the impossibility to observe a quantum mechanical system without changing its state, so if the eavesdropper tampers with the quantum channel, the protocol recognizes the attack and interrupts the computation of the key.

As is known, the main limitation of QKD protocols relates to losses and noise in the quantum communication channel; in a theoretical analysis of QKD systems, the potential eavesdropper is assumed to be able to fully control the quantum channel and he/she can use unlimited classical and quantum resources to hack the secret communication between Alice and Bob; from an experimental point of view this means that all losses must be attributed to the presence of said eavesdropper, because it is not possible to discriminate between natural noise and eavesdropper's action.

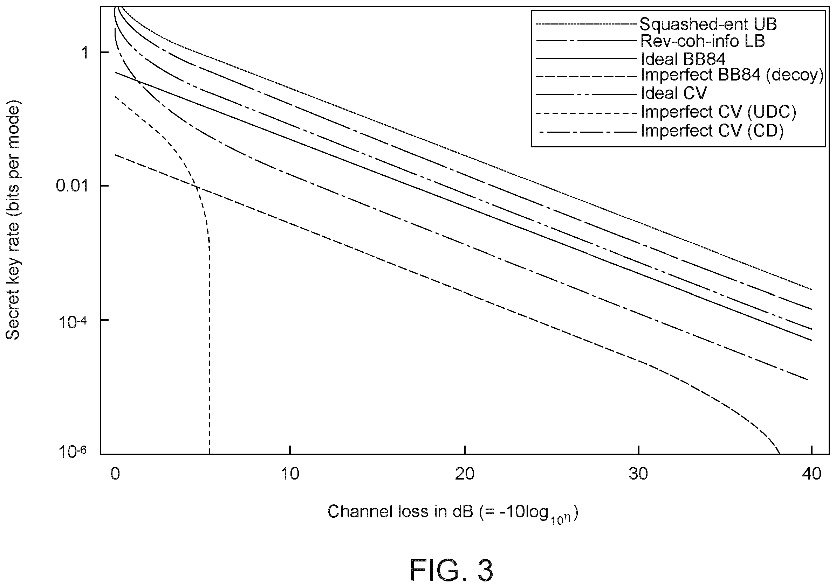

In this regard, Figure 3 illustrates Secret Key Rate (SKR) - channel loss tradeoff for optical QKD applying different protocols, wherein:

- the SKR is expressed as bits per mode (i.e., per QKD protocol), and
- the channel loss is due to noise and is expressed in dB.

As shown in Figure 3, in all represented QKD protocols, the distribution of a secret key is successful only if the noise level, then the channel loss, is sufficiently low, with a relation between the SKR and noise leading to an exponential SKR-distance tradeoff.

In general, QKD is based on pulses that include single photons, wherein it intrinsically conveys small amount of energy leading to a high probability of losing these pulses during transmission, thereby QKD is extremely hard to implement in highly noisy channels as a satellite-to-ground and long-fibre-based communications.

Indeed, even assuming ideal sources and detectors, losses are related to distance between Alice and Bob thus, after a certain distance, it's not possible to use QKD because the secret key rate drops to zero. Currently, the SKR-distance tradeoff is the main limiting factor to long distance direct communications in QKD, both on ground and satellite.

It has been shown that the upper bound of the Secure Key Rate (SKR) is a function of the channel loss, specifically of the maximum tolerated channel noise, regardless of how much optical power the protocol may use.

Nowadays, quantum repeaters and/or trusted nodes architectures are the main technological solution to overcome said limitations, but these solutions are not technologically ready and/or require strong assumptions about network typology.

In view of the foregoing, nowadays there is a strong need for an efficient QKD solution to overcome the limitation in direct communications, in particular the limitation relative to the SKR-distance tradeoff.

## OBJECT AND SUMMARY OF THE INVENTION

In the light of the limitations and drawbacks of the known Quantum Key Distribution (QKD) systems, an object of the present invention is that of introducing controllable tradeoffs between security and performance in QKD transmission systems (the achievable communication distance and Secret Key Rate (SKR)).

This and other objects are achieved by the present invention in that it relates to a QKD transmission system, as defined in the appended claims.

In particular, the QKD transmission system according to the present invention comprises a transmitter and a receiver, wherein the transmitter is configured to transmit a multiphoton pulse to the receiver through a trusted area that extends from the transmitter towards the receiver up to a trusted distance from the transmitter, and wherein the transmitter is configured to transmit the multiphoton pulse with a transmission power such that a single-photon pulse propagates out from the trusted area up to reach the receiver.

## BRIEF DESCRIPTION OF THE DRAWINGS

For a better understanding of the present invention, preferred embodiments, which are intended purely by way of non-limiting, non-binding examples, will now be described with reference to the attached drawings (all not to scale), wherein:

- Figure 1 schematically illustrates an example of implementation of a PM protocol;
- Figure 2 schematically illustrates an example of implementation of a BBM92 protocol;
- Figure 3 shows Secret Key Rate - channel loss tradeoff for optical QKD and for different QKD protocols;
- Figure 4 schematically illustrates a typical architecture of a satellite QKD transmission system of the known type;
- Figure 5 schematically illustrates a satellite QKD transmission system according to a preferred embodiment of the present invention;
- Figure 6 schematically illustrates a QKD transmission system according to a further preferred embodiment of the present invention;
- Figure 7 schematically illustrates a logic of operation of the QKD transmission systems shown in Figure 5 and 6;
- Figure 8 schematically illustrates a functional architecture of a transmitter of the QKD transmission systems shown in Figure 5 and 6;
- Figure 9 schematically illustrates an example of an experimental fibre-based setup for implementing QKD according to the teachings of the present invention; and
- Figure 10 schematically shows an example of differently sized trusted areas for the QKD transmission systems shown in Figure 5 and 6.

## DESCRIPTION OF THE INVENTION

The following description is presented to enable a person skilled in the art to comprehend, make and use the invention. Various modifications to the embodiments will be readily apparent to those skilled in the art, without departing from the scope of the present invention as claimed. Thence, the present invention is not intended to be limited to the embodiments shown and described, but is to be accorded the widest scope of protection consistent with the features defined in the appended claims.

The present invention concerns a Quantum Key Distribution (QKD) transmission system that comprises a transmitter and a receiver.

The transmitter is configured to transmit a multiphoton pulse to the receiver through a trusted area that extends from the transmitter towards the receiver up to a trusted distance from the transmitter.

In particular, the transmitter is configured to transmit the multiphoton pulse with a transmission power such that a single-photon pulse propagates out from the trusted area up to reach the receiver.

Preferably, the QKD transmission system according to the present invention has the capability to control security/performance tradeoff by:

- defining an area of a predefined size that is assumed to be either secured by ad hoc means (e.g., monitoring systems/devices/sensors) or secure by assumption, wherein said area assumed to be secured/secure extends for a trusted distance D (e.g., expressed in km) from a transmitter, and
- computing, accordingly, optical power to be transmitted by the transmitter to a receiver.

In the following, for the sake of description simplicity and without losing generality, the expression "trusted area" will be used as synonym of the expression "area of a predetermined size assumed to be secured/secure", where also multiphoton states that encode the secret key bits can be considered secure. This is because in the trusted area, by definition, there is no eavesdropper.

The QKD transmission system according to the present invention increases the key transmission rate proportionally to the trusted distance D, thus a higher D leads to high transmission performances (i.e., higher Secret Key Rate - SKR) but lower security guarantees, while lower D leads to lower transmission performances (i.e., lower SKR) but higher security.

In the following, a satellite QKD transmission system according to a preferred embodiment of the present invention will be described in detail. However, the satellite application of the invention is not limiting, nor bounding, since the latter can be advantageously exploited, mutatis mutandi, also for terrestrial applications.

In the satellite scenario, it is legitimate to assume that it is easy to detect the presence of a potential observer within a certain area from the source, whereby some constraints on single-photon states can be relaxed.

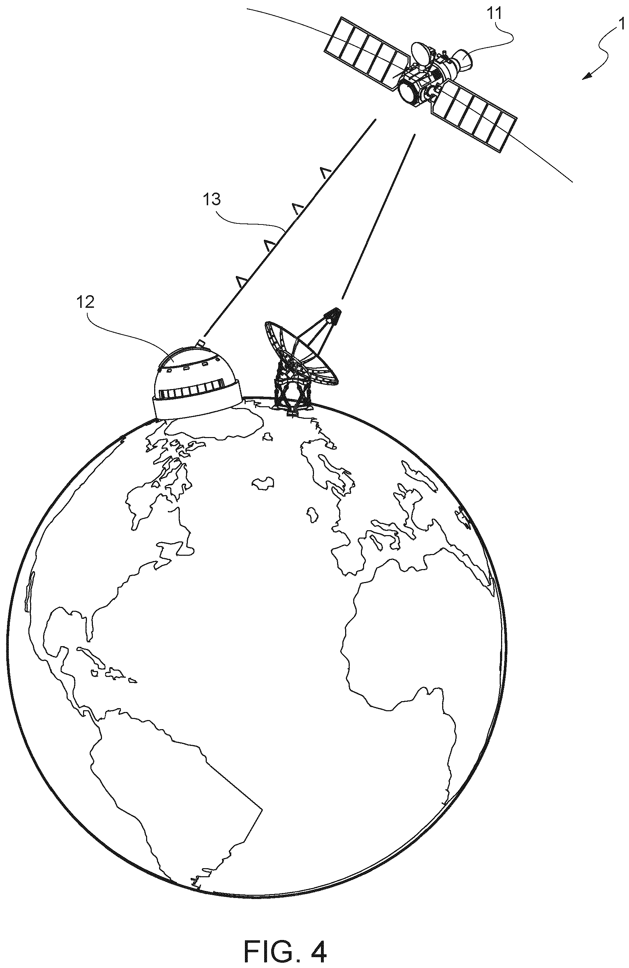

In this context, Figure 4 schematically illustrates a typical architecture of a satellite QKD transmission system of the known type (denoted as a whole by 1). The satellite QKD transmission system 1 comprises a transmitter (TX) installed on board a satellite 11 and a receiver (RX) integrated into a ground station 12, wherein an optical link 13 is established between the TX and the RX based on transmission of single-photon pulses.

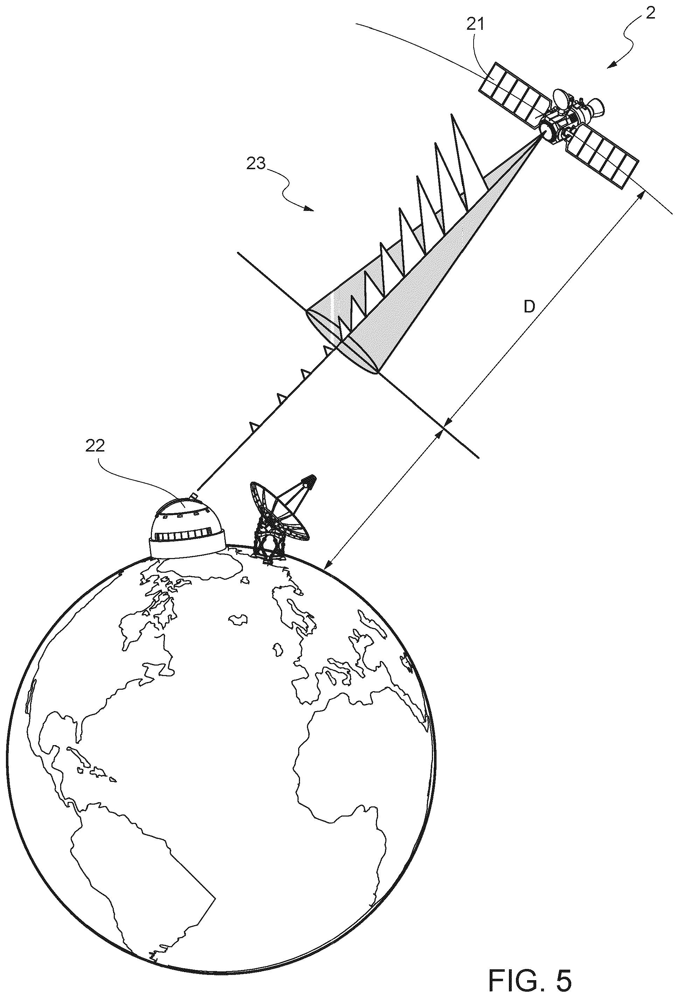

Figure 5 schematically illustrates a high-level architecture of a satellite QKD transmission system 2 according to a preferred embodiment of the present invention. As shown in Figure 5, the satellite QKD transmission system 2 comprises a transmitter (TX) installed on board a satellite 21 and a receiver (RX) integrated into a ground station 22, wherein a trusted area 23 extends from the TX towards the RX up to a trusted distance D (e.g., expressed in km) from the TX.

Preferably, as shown in Figure 5, the trusted area 23 is shaped as a right circular cone with apex located at the TX, wherein the cone's height coincides with the trusted distance D.

In use, the TX transmits to the RX, through the trusted area 23, high-power, multiphoton pulses, thereby increasing the overall probability that a photon reaches the RX. However, the transmission of high-power, multiphoton pulses implies that for the trusted area 23 the communication cannot be considered to be intrinsically secure, but the trusted area 23 can be assumed to be secured, either because in the proximity of the TX, for the geometry of the satellite QKD transmission system 2, an eavesdropper cannot be present, or because actively monitoring of the trusted area 23 is implemented.

The satellite QKD transmission system 2 has the following advantages compared to the satellite QKD transmission system 1 of the known type (more in general compared to all known satellite QKD systems):

- increase in achievable communication distance by an arbitrary amount,
- increase in achievable key rate proportionally to trusted distance D increase,
- activation of a controllable tradeoff between the achievable communication distance and the SKR increases by constraining the size of the trusted area 23,
- security guarantees are constrained only to the regions where they are needed, thus increasing system performance,
- security balancing can be achieved with an active monitoring of the area excluded from QKD security.

Moreover, said advantages lead to:

- enabling of new applications and applicative scenarios for QKD transmission systems previously unfeasible due to

  - exceeding overall communication distance, and
  - achievable key rate not compatible with encryption system requirements;

- an increase of performance of existing QKD applicative scenarios, for example through

  - dynamically choosing a trusted area to achieve the best tradeoff on SKR and security based on the specific context,
  - statically exploiting an area around the transmission system (in many contexts, the area around the transmitter can be considered secure a priori).

Furthermore, the satellite QKD transmission system 2 is able to introduce these benefits with a minimal impact on a QKD standalone transmission system design, specifically:

- no impacts on a receiver of a QKD transmission system;
- no impacts on channel infrastructure;
- no impacts on end-to-end QKD protocol;
- minor modifications to transmitter hardware design.

In detail, by relaxing the constraint of single-photon-based coding key exchange for a certain portion of a link (i.e., for a trusted distance D from a transmitter), it's possible to increase the achievable communication distance and the achievable key rate. However, it's worth noting that the trusted area 23 is not secured by a single-photon pulse thus opening said trusted area 23 to photon splitting attacks, that is a strong vulnerability in QKD protocols.

In the following, two features of the satellite QKD transmission system 2 will be described in detail, namely how the definition of the trusted area 23 implies an increase in achievable communication distance and key rate, and how the above vulnerability is handled.

The trusted area 23 is used to transmit multiphoton pulses conveying a higher energy per pulse, thereby increasing the probability that one or more photons survive during their propagation. The satellite QKD transmission system 2 exploits a multiphoton bucket whose size is computed in order to allow the statistical achievement of single-photon conditions at the trusted distance D. In this way, a single-photon transmission and, hence, a secure communication are achieved outside the trusted area 23 (or safe region).

The concept of safe region is advantageously exploitable for space-earth, space and terrestrial communications, over guided means (e.g., fibers) or over free space.

The safe region (i.e., the trusted area 23) is actively monitored to detect possible eavesdroppers (e.g., unauthorized users).

In use, the TX of the satellite QKD transmission system 2 determines, based on the trusted distance D (that defines the size of the trusted area 23), a transmission power $P_{Tx}$ such that to ensure, in statistical terms, that a single-photon pulse propagates from the boundary of the trusted area 23. Namely, in mathematical terms: the secured distance D will be the value for which *Number_photons (D) =1*, where *Number_photons (•)* is a decreasing function of the distance of the photons from the TX (i.e., *Number_photons (•)* decreases as the distance of the photons from the TX increases). The photon decrease is modelled using a channel model, wherein the more accurate the channel model, the better estimation of the trusted distance D. It's worth noting that, for satellite applications, the main parameters to consider are the atmospheric losses.

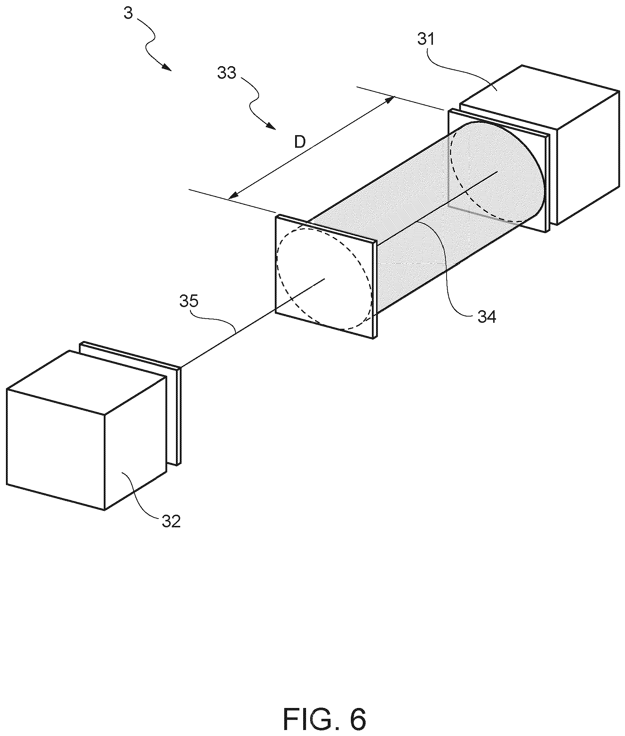

Figure 6 schematically illustrates a high-level architecture of a QKD transmission system 3 according to a preferred embodiment of the present invention. As shown in Figure 6, the QKD transmission system 3 comprises a transmitter (TX) 31 and a receiver (RX) 32, wherein a trusted area 33 extends from the TX 31 towards the RX 32 up to a trusted distance D from the TX 31.

In use, the TX 31 emits a high-energy multiphoton pulse that travels through the trusted area 33 via a multiphoton link 34 while the number of photons decreases as the distance from the TX 31 increases until, at the boundary of the trusted area 33, the high-energy multiphoton pulse has become a single-photon pulse that travels via a single-photon link 35 and reaches the receiver 32.

The high-energy multiphoton pulse emission by the TX 31 is repeated as many times as necessary to obtain the entire quantum key exchange, enabling the compatibility and the advantages of QKD protocols, but with a higher data rate and a better Quantum Bit Error Rate (QBER).

It's worth to notice that a user, that has the right to a Class of Service (CoS) for encryption, together with its priority and amount of keys required, can use the CoS, the priority and the amount of keys required as information to define the trusted area's size, thus the trusted distance D thereof. For example, if the CoS requires a small amount of key bits for encryption, extending the trusted area 33 and thus the key rate may not be of relevance, whereby the QKD transmission system 3 may choose to decrease the size of said trusted area 33, thus the trusted distance D from the transmitter 31.

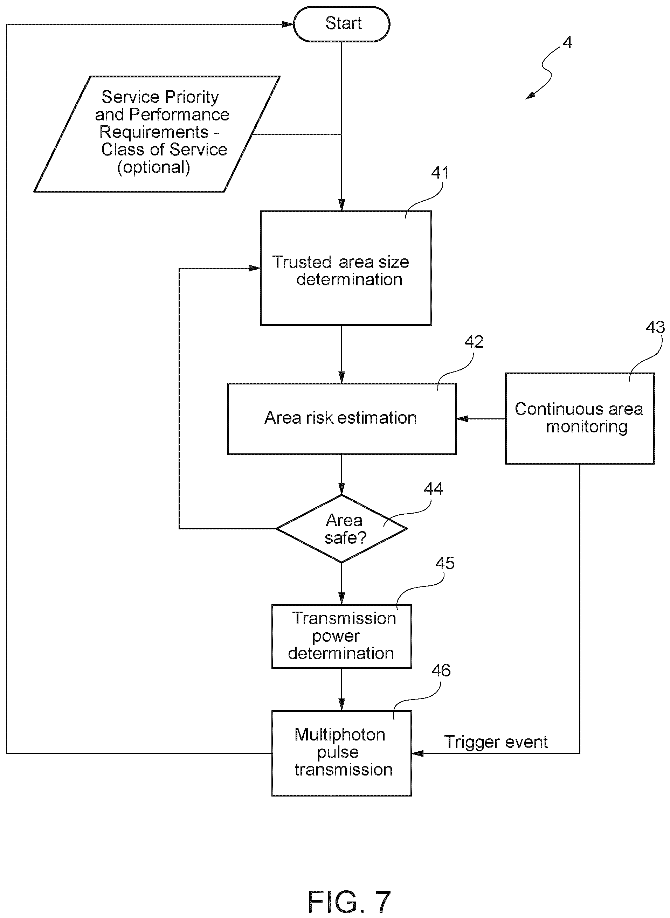

Figure 7 schematically illustrates a logic of operation (denoted as a whole by 4) of the QKD transmission system 3 according to a preferred embodiment of the present invention for determining the size of the trusted area 33, namely the trusted distance D, and the transmission power $P_{Tx}$ to be used for transmitting the multiphoton pulses.

In particular, the logic of operation 4 of the QKD transmission system 3 shown in Figure 7 includes:

1) determining the size of the trusted area 33 - i.e., the trusted distance D - based on encryption service priority and performance requirements (i.e., service, security and key rate required by a user) and optionally on CoS (block 41);
2) estimating the risk of an area around the TX 31 (e.g., an area around a satellite) that extends up to the determined trusted distance D therefrom towards the receiver 32 (block 42) based on a continuous monitoring of the area (block 43) by means of sensors (e.g., LIDAR, Radar, etc.) or based on Earth monitoring; moreover, optionally, information related to the encryption service itself, such as the importance of increasing the rate for the specific service and its relative criticality, can be conveniently taken into account in the risk estimation (block 42);
3) checking safeness of the area around the TX 31 (block 44); if said area is safe, a trusted area 33 of extension D is defined; otherwise, the trusted distance D is re-evaluated by performing again the step 1), for example by taking into account a reduced trusted distance; in this way, the trusted distance D can be re-evaluated periodically and dynamically;
4) determining the transmission power (block 45) to be used for transmitting an amount N of photons (N being a positive integer higher than one) such that the propagation of said N photons for the trusted distance D leads statistically to a number of photons equal to one with high probability, namely higher than a predefined threshold; in mathematical terms,

$$P\{ Nphotons(N, D, P_{Tx}, Channel\_Model) = 1\} > Threshold,$$

where N denotes the number of photons transmitted associated to a transmission power $P_{Tx}$, *Channel_Model* denotes a predefined model assumed for the transmission channel and modelling channel losses during photon propagation, *Nphotons* denotes a function providing the number of photons present at distance *D* (i.e., the trusted distance) from the transmitter 31 based on the number of transmitted photons N, the trusted distance *D,* the transmission power $P_{Tx}$ and the channel model *Channel_Model, P* denotes a probability function, specifically that the function *Nphotons* is equal to one, and *Threshold* denotes a numerical value (between 0 and 1), defined as input (e.g. by system design), that represents how conservative and how tolerant the system is to security leakages; specifically, this parameter characterizes the admissible probability that an error occurs in achieving the single photon transmission at the exit of the specified area (if *Threshold* is low, e.g. 0.3, the system could achieve high communication performance, at the cost of possibly accepting a transmitted power such that the probability that multiphoton occur could be as high as 70% (0.7 = 1.0 - 0.3), possibly leading to security issues); as for the channel model, it is worth noting that the more accurate the channel model, the more efficient the QKD transmission system 3 in determining the trusted distance $D$; for example, in case of simple channel modelling, an arbitrarily conservative trusted area 33 can be assumed, leading to a decrease in efficiency in determining the trusted distance D, reducing the benefits of the solution itself; and

5) transmitting for a time T (e.g., expressed in seconds), by the transmitter 31, with the determined transmission power $P_{Tx}$, pulses carrying $N$ photons (block 46); conveniently, if a potential threat to the security of the trusted area 33 (or, more in general, to the transmission) is detected based on the continuous monitoring of the area around the transmitter 31 (block 43), the transmission is stopped and, conveniently, the procedure is started again from the step 1) (block 41) based on a different the size of the trusted area 33 (i.e., a different trusted distance D).

In this way, a bidirectional classical communication can be established between two users and an agreement protocol can be implemented by the two users to agree on a secret key.

It's worth noting that, the above logic of operation 4 of the QKD transmission system 3 ensures the security of the trusted area 33 in which it is possible to have a secure photon propagation from the transmitter 31. The concept of security is to be intended from the point of view of communications, whereby it is assured that no sniffing of transmitted photons is possible.

In particular, security is assured inside the trusted area 33 by monitoring the area and by making sure that no eavesdroppers are present. Monitoring of the sensitive area, such as to ensure the trusted area 33, can be conveniently carried out by detecting:

- entities present in the area and
- emissions in the radio frequency (RF) or optical spectrum.

It is important to draw the attention to the fact that also the satellite QKD transmission system 2 shown in Figure 5 and previously described is configured/designed to implement the above logic of operation 4.

With specific reference to satellite application, these two ways of detection can already be achieved with ground-based facilities (e.g., Kratos Sensor Network), while with the commercial push on SSA, SDA and safeguarding security there are already studies underway to expand the concept of space asset monitoring also with space-based sensors.

It's worth noting that the present invention can be advantageously exploited, in addition to satellite/space-earth communications, by any pairs of users adopting a DV QKD protocol on the basis of pulses implementation. More in general, the present invention can be applied to any couple of users connected through an absorptive media, implementing QKD.

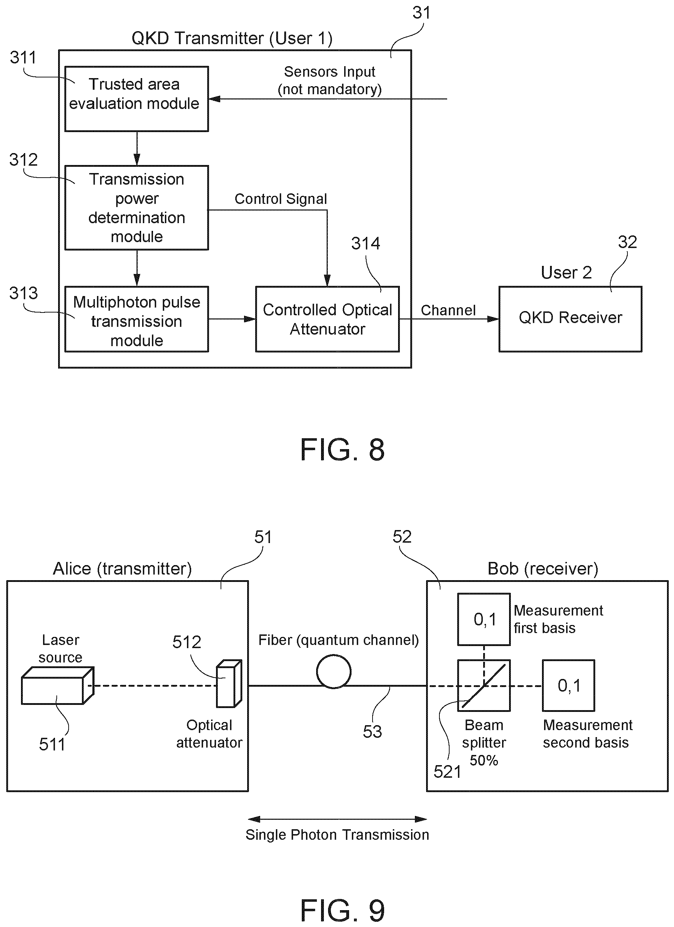

Figure 8 schematically illustrates an example of functional architecture of the transmitter 31 for implementing the logic of operation 4. As shown in Figure 8, the transmitter 31 includes:

- a first module 311 for evaluation of the trusted area 33 (blocks 41,42,44 of the logic of operation 4);
- a second module 312 for determination of the transmission power (block 45 of the logic of operation 4); and
- a third module 313 for multiphoton pulse transmission via a controlled optical attenuator 314 operated by the transmission power determination module 312 by means of a control signal (block 46 of the logic of operation 4).

Figure 9 schematically illustrates an example of an experimental fibre-based setup for implementing QKD according to the teachings of the present invention.

As shown in Figure 9, a first user, in QKD sector typically called Alice, that uses a transmitter 51, needs to share a secret key with a second user, in QKD sector typically called Bob, that uses a receiver 52, wherein the transmitter 51 and the receiver 52 are linked by a fibre-based quantum channel 53 to be used for QKD. The transmitter 51 includes a laser source 511 that injects a laser beam into the fibre-based quantum channel 53 via an optical attenuator 512. The laser beam propagates through the fibre-based quantum channel 53 (e.g., an optical fibre). As is known, an optical fibre is characterized by typical losses, for example about 0.2 dB for km whereby, after one hundred km, an overall loss of twenty dB is measured, reducing the input power by a factor of one hundred.

The receiver 52 includes a symmetric beam splitter 521 that splits the received laser beam for implementing the basis choice.

It's worth noting that photons are low-intensity pulses of light, thus the optical fibre losses limit maximum QKD distance on ground to about 400 km, whereby this distance is not sufficient to cover the needs of a national QKD infrastructure for direct communication.

In view of the foregoing, the QKD transmission system shown in Figure 9 can achieve a loss reduction proportional to $\alpha D$, where $\alpha$ [dB/Km] is the attenuation coefficient of the optical fibre and D is the trusted distance. For instance, considering a Decoy State BB84 protocol wherein $\alpha$ = 0.2 dB/Km and D = 20 Km, the QKD transmission system can reduce losses of 5 dB (with respect to two users 150 km apart), thus achieving an increase in SKR of about 200% (up to $3 \times 10^5$ *bit/s*).

In particular, the achievable speed up in secret key rate (SKR) can be better than in the satellite scenario, but the trusted area is difficult to define; indeed, even if it is a well-defined part of the ground (i.e., a surface), the trusted area is strongly dependent on the level of assumption that is made on the security of the territory and on the possible presence of eavesdroppers. For example, the trusted area can be:

- the perimeter of the building housing the optical source;
- a regional border; or
- a national border.

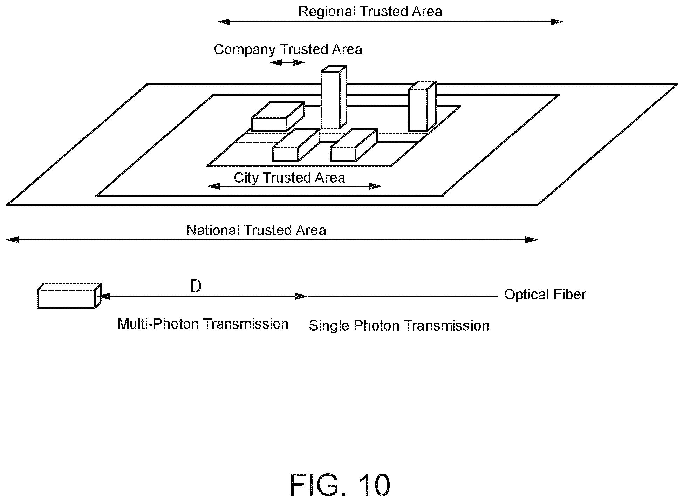

Based on these assumptions, the extension of the trusted area can result in a large range of possible values and it's difficult to quantify the real performance increase. In this respect, Figure 10 shows an example of differently sized trusted areas (at company, city, regional and national levels), wherein different trusted distances D can be defined based on what is considered to be trusted.

In view of the foregoing, it's relevant to remark that the present invention, that concerns an adaptive QKD solution based on the trusted area concept, is capable of enabling a high-performance key rate transmission by relaxing the security conservativeness of QKD protocols.

In fact, the present invention teaches to:

1) use a power adaptive QKD transmitter that adopts the concept of a trusted area (i.e., an area to be considered secure), either by assumption or by other means of control (e.g., sensor monitoring);
2) perform a computation of the power to be transmitted with QKD protocol from the transmitter to the receiver, wherein the computation involves the determination of the power that needs to be transmitted such that a single-photon communication is obtained just upon the propagation exits from the trusted area; and
3) carry out dynamical adaptation of the trusted area size based on a risk evaluation of the trusted area and on the policy of the service to be encrypted.

In conclusion, it is clear that numerous modifications and variants can be made to the present invention, all falling within the scope of the invention, as defined in the appended claims.

## Claims

1. Quantum Key Distribution (QKD) transmission system (2,3) comprising a transmitter (31) and a receiver (32), wherein the transmitter (31) is configured to transmit a multiphoton pulse to the receiver (32) through a trusted area (23,33) that extends from the transmitter (31) towards the receiver (32) up to a trusted distance (D) from the transmitter (31); wherein the transmitter (31) is configured to transmit the multiphoton pulse with a transmission power such that a single-photon pulse propagates out from the trusted area (23,33) up to reach the receiver (32).

2. The Quantum Key Distribution transmission system of claim 1, wherein the transmitter (31) is configured to:

   a) determine the trusted distance (D) thereby defining a trusted area's size;
   b) assess security of the trusted area (23,33);
   c) if the trusted area (23,33) is secure,

      i. determine a transmission power such that, by transmitting a multiphoton pulse with said transmission power, a single-photon pulse propagates out from the trusted area (23,33) up to reach the receiver (32), and
      ii. transmit a multiphoton pulse with the determined transmission power;

   d) if the trusted area (23,33) is not secure, carry out the steps a), b), and c) or d) by determining a different trusted distance (D).

3. The Quantum Key Distribution transmission system of claim 2, wherein:

   • the trusted distance (D) is determined based on priority and performance requirements related to a requested encryption service and, optionally, also on a class of service of said encryption service;
   • the security of the trusted area (23,33) is assessed based on a continuous monitoring of the trusted area (23,33) or of an area around the transmitter (31);

• the transmission power is determined such that propagation of N transmitted photons through the trusted area (23,33) leads statistically to a number of photons equal to one at the trusted distance (D) with a probability higher than a predefined threshold, N being a positive integer higher than one;

• the transmitted multiphoton pulse carries the N photons.

4. The Quantum Key Distribution transmission system of claim 3, wherein the transmission power is determined based on the following mathematical formula:

$$P\{Nphotons(N, D, P_{Tx}, Channel\_Model) = 1\} > Threshold,$$

where $D$ denotes the trusted distance, $P_{Tx}$ denotes the transmission power, $N$ denotes the number of photons transmitted with the transmission power $P_{Tx}$, $Channel\_Model$ denotes a predefined channel model assumed for the transmission channel and modelling channel losses during photon propagation, $Nphotons$ denotes a function providing the number of photons present at the trusted distance $D$ from the transmitter (31) based on the number of transmitted photons $N$, the trusted distance $D$, the transmission power $P_{Tx}$ and the predefined channel model $Channel\_Model$, $P$ denotes the probability that the function $Nphotons$ is equal to one, and $Threshold$ denotes a predefined threshold.

5. The Quantum Key Distribution transmission system according to claim 3 or 4, wherein the continuous monitoring of the trusted area (23,33) or of the area around the transmitter (31) is carried out by means of one or more sensors and/or based on Earth monitoring.

6. The Quantum Key Distribution transmission system according to any one of claims 3-5, wherein the transmitter (31) is configured to stop transmitting the multiphoton pulse if a potential threat to security of the trusted area (23,33) is detected based on the continuous monitoring.

7. The Quantum Key Distribution transmission system of claim 6, wherein the transmitter (31) is configured to, if it stops transmitting due to a detected potential threat, carry out the steps a), b), and c) or d) by determining a different trusted distance (D).

8. The Quantum Key Distribution transmission system according to any one of the preceding claims, wherein said Quantum Key Distribution transmission system is integrated into a space or satellite or terrestrial or space/satellite-earth communication system.

9. Transmitting system configured as the transmitter (31) of the Quantum Key Distribution transmission system (2,3) as claimed in any preceding claim.

10. Method for Quantum Key Distribution (QKD) transmission from a transmitter (31) to a receiver (32), comprising transmitting, by the transmitter (31), a multiphoton pulse to the receiver (32) through a trusted area (23,33) that extends from the transmitter (31) towards the receiver (32) up to a trusted distance (D) from the transmitter (31); wherein transmitting includes transmitting the multiphoton pulse with a transmission power such that a single-photon pulse propagates out from the trusted area (23,33) up to reach the receiver (32).

11. The method of claim 10, including:

    a) determining the trusted distance (D) thereby defining a trusted area's size;
    b) assessing security of the trusted area (23,33);
    c) if the trusted area (23,33) is secure,

        i. determining a transmission power such that, by transmitting a multiphoton pulse with said transmission power by the transmitter (31), a single-photon pulse propagates out from the trusted area (23,33) up to reach the receiver (32), and
        ii. transmitting, by the transmitter (31), a multiphoton pulse with the determined transmission power;

    d) if the trusted area (23,33) is not secure, carrying out the steps a), b), and c) or d) by determining a different trusted distance (D).

**12.** The method of claim 11, wherein:

> • the trusted distance (D) is determined based on priority and performance requirements related to a requested encryption service and, optionally, also on a class of service of said encryption service;
> • the security of the trusted area (23,33) is assessed based on a continuous monitoring of the trusted area (23,33) or of an area around the transmitter (31);
> • the transmission power is determined such that propagation of N transmitted photons through the trusted area (23,33) leads statistically to a number of photons equal to one at the trusted distance (D) with a probability higher than a predefined threshold, N being a positive integer higher than one;
> • the transmitted multiphoton pulse carries the N photons.

**13.** The method of claim 12, wherein the transmission power is determined based on the following mathematical formula:

$$P\{\, Nphotons(N, D, P_{Tx}, Channel\_Model) = 1\} > Threshold\,,$$

where $D$ denotes the trusted distance, $P_{Tx}$ denotes the transmission power, $N$ denotes the number of photons transmitted with the transmission power $P_{Tx}$, $Channel\_Model$ denotes a predefined channel model assumed for the transmission channel and modelling channel losses during photon propagation, $Nphotons$ denotes a function providing the number of photons present at the trusted distance $D$ from the transmitter (31) based on the number of transmitted photons $N$, the trusted distance $D$, the transmission power $P_{Tx}$ and the predefined channel model $Channel\_Model$, $P$ denotes the probability that the function $Nphotons$ is equal to one, and $Threshold$ denotes a predefined threshold.

**14.** The method according to claim 12 or 13, wherein the continuous monitoring of the trusted area (23,33) or of the area around the transmitter (31) is carried out by means of one or more sensors and/or based on Earth monitoring.

**15.** The method according to any one of claims 12-14, further comprising stopping transmitting the multiphoton pulse if a potential threat to security of the trusted area (23,33) is detected based on the continuous monitoring.

**16.** The method of claim 15, further comprising, if transmitting the multiphoton pulse is stopped due to a detected potential threat, carrying out the steps a), b), and c) or d) by determining a different trusted distance (D) .

**Patentansprüche**

**1.** Quantenschlüsselverteilungs- (QKD-) Übertragungssystem (2, 3), das einen Sender (31) und einen Empfänger (32) aufweist, wobei der Sender (31) konfiguriert ist, um durch einen vertrauenswürdigen Bereich (23, 33), der sich von dem Sender (31) bis zu einer vertrauenswürdigen Distanz (D) von dem Sender (31) in Richtung des Empfängers (32) erstreckt, einen Multiphotonenimpuls an den Empfänger (32) zu übertragen; wobei der Sender (31) konfiguriert ist, um den Multiphotonenimpuls mit einer Sendeleistung zu übertragen, so dass ein Ein-Photonenimpuls sich von dem vertrauenswürdigen Bereich (23, 33) ausbreitet und den Empfänger (32) erreicht.

**2.** Quantenschlüsselverteilungsübertragungssystem nach Anspruch 1, wobei der Sender (31) konfiguriert ist, um:

> a) die vertrauenswürdige Distanz (D) zu bestimmen, wodurch eine Größe des vertrauenswürdigen Bereichs definiert wird;
> b) die Sicherheit des vertrauenswürdigen Bereichs (23, 33) zu bewerten;
> c) wenn der vertrauenswürdige Bereich (23, 33) sicher ist,
>
>> i) eine Sendeleistung derart zu bestimmen, dass sich durch Übertragen eines Multiphotonenimpulses mit dieser Sendeleistung ein Ein-Photonenimpuls von dem vertrauenswürdigen Bereich (23, 33) ausbreitet und den Empfänger (32) erreicht, und
>> ii) einen Multiphotonenimpuls mit der bestimmten Sendeleistung zu übertragen;
>
> d) wenn der vertrauenswürdige Bereich (23, 33) nicht sicher ist, die Schritte a), b) und c) oder d) auszuführen, indem eine unterschiedliche vertrauenswürdige Distanz (D) bestimmt wird.

3. Quantenschlüsselverteilungsübertragungssystem nach Anspruch 2, wobei:

• die vertrauenswürdige Distanz (D) basierend auf einen geforderten Verschlüsselungsdienst betreffenden Prioritäts- und Leistungsanforderungen und wahlweise auch auf einer Dienstklasse des Verschlüsselungsdienstes bestimmt wird;
• die Sicherheit des vertrauenswürdigen Bereichs (23, 33) basierend auf einer fortlaufenden Überwachung des vertrauenswürdigen Bereichs (23, 33) oder eines Bereichs um den Sender (31) herum bewertet wird;
• die Sendeleistung derart bestimmt wird, dass die Ausbreitung von N übertragenen Photonen durch den vertrauenswürdigen Bereich (23, 33) bei der vertrauenswürdigen Distanz (D) mit einer Wahrscheinlichkeit, die höher als ein vordefinierter Schwellwert ist, statistisch zu einer Anzahl von Photonen gleich eins führt, wobei N eine positive ganze Zahl größer eins ist;
• der übertragene Multiphotonenimpuls die N Photonen transportiert.

4. Quantenschlüsselverteilungsübertragungssystem nach Anspruch 3, wobei die Sendeleistung basierend auf der folgenden mathematischen Formel bestimmt wird:

$$P\{Nphotonen(N, D, P_{Tx}, Kanalmodell) = 1\} > Schwellwert,$$

wobei $D$ die vertrauenswürdige Distanz bezeichnet, $P_{Tx}$ die Sendeleistung bezeichnet, wobei N die Anzahl von Photonen bezeichnet, die mit der Sendeleistung $P_{Tx}$ übertragen wird, wobei Kanalmodell ein vordefiniertes Kanalmodell bezeichnet, das für den Übertragungskanal angenommen wird, und Kanalverluste während der Photonenausbreitung modelliert, wobei Nphotonen eine Funktion bezeichnet, welche die Anzahl von Photonen, die bei der vertrauenswürdigen Distanz D ab dem Sender (31) vorhanden ist, basierend auf der Anzahl übertragener Photonen N, der vertrauenswürdigen Distanz D, der Übertragungsleistung $P_{Tx}$ und dem vordefinierten Kanalmodell bereitstellt, wobei P die Wahrscheinlichkeit, dass die Funktion Nphotonen gleich eins ist, bezeichnet und Schwellwert einen vordefinierten Schwellwert bezeichnet.

5. Quantenschlüsselverteilungsübertragungssystem nach Anspruch 3 oder 4, wobei das fortlaufende Überwachen des vertrauenswürdigen Bereichs (23, 33) oder des Bereichs um den Sender (31) herum mit Hilfe eines oder mehrerer Sensoren und/oder basierend auf einer Erdüberwachung ausgeführt wird.

6. Quantenschlüsselverteilungsübertragungssystem nach einem der Ansprüche 3 - 5, wobei der Sender (31) konfiguriert ist, um das Übertragen des Multiphotonenimpulses zu stoppen, wenn basierend auf der fortlaufenden Überwachung eine mögliche Bedrohung der Sicherheit des vertrauenswürdigen Bereichs (23, 33) erfasst wird.

7. Quantenschlüsselverteilungsübertragungssystem nach Anspruch 6, wobei der Sender (31) konfiguriert ist, um, wenn er aufgrund einer erfassten möglichen Bedrohung das Übertragen stoppt, die Schritte a), b) und c) oder d) auszuführen, indem eine unterschiedliche vertrauenswürdige Distanz (D) bestimmt wird.

8. Quantenschlüsselverteilungsübertragungssystem nach einem der vorhergehenden Ansprüche, wobei das Quantenschlüsselverteilungsübertragungssystem in ein Raum- oder Satelliten- oder terrestrisches oder Raum-/Satelliten-Erde-Kommunikationssystem integriert ist.

9. Übertragungssystem, das als der Sender (31) des Quantenschlüsselverteilungsübertragungssystems (2, 3) nach einem der vorhergehenden Ansprüche konfiguriert ist.

10. Quantenschlüsselverteilungs- (QKD-) Übertragungsverfahren von einem Sender (31) an einen Empfänger (32), welches das Übertragen eines Multiphotonenimpulses durch einen vertrauenswürdigen Bereich (23, 33), der sich über eine vertrauenswürdige Distanz (D) von dem Sender (31) in Richtung des Empfängers (32) erstreckt, durch den Sender (31) aufweist; wobei das Übertragen das Übertragen des Multiphotonenimpulses mit einer Übertragungsleistung umfasst, so dass ein Ein-Photonenimpuls sich von dem vertrauenswürdigen Bereich (23, 33) ausbreitet und den Empfänger (32) erreicht.

11. Verfahren nach Anspruch 10, das umfasst:

a) Bestimmen der vertrauenswürdigen Distanz (D), wodurch eine Größe des vertrauenswürdigen Bereichs definiert wird;

b) Bewerten der Sicherheit des vertrauenswürdigen Bereichs (23, 33);
c) wenn der vertrauenswürdige Bereich (23, 33) sicher ist,

i) Bestimmen einer Sendeleistung derart, dass sich durch Übertragen eines Multiphotonenimpulses mit dieser Sendeleistung ein Ein-Photonenimpuls von dem vertrauenswürdigen Bereich (23, 33) ausbreitet und den Empfänger (32) erreicht, und
ii) Übertragen eines Multiphotonenimpulses mit der bestimmten Sendeleistung durch den Sender;

d) wenn der vertrauenswürdige Bereich (23, 33) nicht sicher ist, Ausführen der Schritte a), b) und c) oder d), indem eine unterschiedliche vertrauenswürdige Distanz (D) bestimmt wird.

**12.** Verfahren nach Anspruch 11, wobei:

• die vertrauenswürdige Distanz (D) basierend auf einen geforderten Verschlüsselungsdienst betreffenden Prioritäts- und Leistungsanforderungen und wahlweise auch auf einer Dienstklasse des Verschlüsselungsdienstes bestimmt wird;
• die Sicherheit des vertrauenswürdigen Bereichs (23, 33) basierend auf einer fortlaufenden Überwachung des vertrauenswürdigen Bereichs (23, 33) oder eines Bereichs um den Sender (31) herum bewertet wird;
• die Sendeleistung derart bestimmt wird, dass die Ausbreitung von N übertragenen Photonen durch den vertrauenswürdigen Bereich (23, 33) bei der vertrauenswürdigen Distanz (D) mit einer Wahrscheinlichkeit, die höher als ein vordefinierter Schwellwert ist, statistisch zu einer Anzahl von Photonen gleich eins führt, wobei N eine positive ganze Zahl größer eins ist;
• der übertragene Multiphotonenimpuls die N Photonen transportiert.

**13.** Verfahren nach Anspruch 12, wobei die Sendeleistung basierend auf der folgenden mathematischen Formel bestimmt wird:

$$P\{Nphotonen(N, D, P_{Tx}, Kanalmodell) = 1\} > Schwellwert,$$

wobei $D$ die vertrauenswürdige Distanz bezeichnet, $P_{Tx}$ die Sendeleistung bezeichnet, wobei N die Anzahl von Photonen bezeichnet, die mit der Sendeleistung $P_{Tx}$ übertragen wird, wobei *Kanalmodell* ein vordefiniertes Kanalmodell bezeichnet, das für den Übertragungskanal angenommen wird, und Kanalverluste während der Photonenausbreitung modelliert, wobei *Nphotonen* eine Funktion bezeichnet, welche die Anzahl von Photonen, die bei der vertrauenswürdigen Distanz $D$ ab dem Sender (31) vorhanden ist, basierend auf der Anzahl übertragener Photonen $N$, der vertrauenswürdigen Distanz $D$, der Übertragungsleistung $P_{Tx}$ und dem vordefinierten *Kanalmodell* bereitstellt, wobei $P$ die Wahrscheinlichkeit, dass die Funktion *Nphotonen* gleich eins ist, bezeichnet und *Schwellwert* einen vordefinierten Schwellwert bezeichnet.

**14.** Verfahren nach Anspruch 12 oder 13, wobei das fortlaufende Überwachen des vertrauenswürdigen Bereichs (23, 33) oder des Bereichs um den Sender (31) herum mit Hilfe eines oder mehrerer Sensoren und/oder basierend auf einer Erdüberwachung ausgeführt wird.

**15.** Verfahren nach einem der Ansprüche 12 - 14, das ferner das Stoppen der Übertragung des Multiphotonenimpulses aufweist, wenn basierend auf der fortlaufenden Überwachung eine mögliche Bedrohung der Sicherheit des vertrauenswürdigen Bereichs (23, 33) erfasst wird.

**16.** Verfahren nach Anspruch 15, das ferner aufweist, wenn die Übertragung des Multiphotonenimpulses aufgrund einer erfassten möglichen Bedrohung gestoppt wird, das Ausführen der Schritte a), b) und c) oder d), indem eine unterschiedliche vertrauenswürdige Distanz (D) bestimmt wird.

**Revendications**

**1.** Système d'émission de distribution quantique de clés (QKD) (2, 3) comprenant un émetteur (31) et un récepteur (32), dans lequel l'émetteur (31) est configuré pour émettre une impulsion multiphotonique vers le récepteur (32) à travers une zone de confiance (23, 33) qui s'étend depuis l'émetteur (31) vers le récepteur (32) jusqu'à une distance de confiance (D) à partir de l'émetteur (31) ; dans lequel l'émetteur (31) est configuré pour émettre l'impulsion multiphotonique avec une puissance d'émission telle qu'une impulsion monophotonique se propage hors de la zone de confiance (23, 33) jusqu'à atteindre le récepteur (32).

2. Système d'émission de distribution quantique de clés selon la revendication 1, dans lequel l'émetteur (31) est configuré pour :

   a) déterminer la distance de confiance (D) définissant ainsi une taille d'une zone de confiance ;
   b) évaluer la sécurité de la zone de confiance (23, 33) ;
   c) si la zone de confiance (23, 33) est sûre,

       i. déterminer une puissance d'émission telle que, en émettant une impulsion multiphotonique avec ladite puissance d'émission, une impulsion monophotonique se propage hors de la zone de confiance (23, 33) jusqu'à atteindre le récepteur (32), et
       ii. émettre une impulsion multiphotonique avec la puissance d'émission déterminée ;

   d) si la zone de confiance (23, 33) n'est pas sûre, réaliser les étapes a), b) et c) ou d) en déterminant une distance de confiance (D) différente.

3. Système d'émission de distribution quantique de clés selon la revendication 2, dans lequel :

   • la distance de confiance (D) est déterminée sur la base d'exigences de priorité et de performance liées à un service de chiffrement demandé, et, optionnellement, également d'une classe de service dudit service de chiffrement ;
   • la sécurité de la zone de confiance (23, 33) est évaluée sur la base d'une surveillance continue de la zone de confiance (23, 33) ou d'une zone autour de l'émetteur (31) ;
   • la puissance d'émission est déterminée de sorte que la propagation de N photons émis à travers la zone de confiance (23, 33) conduise statistiquement à un nombre de photons égal à un à la distance de confiance (D) avec une probabilité supérieure à un seuil prédéfini, N étant un entier positif supérieur à un ;
   • l'impulsion multiphotonique émise transporte les N photons.

4. Système d'émission de distribution quantique de clés selon la revendication 3, dans lequel la puissance d'émission est déterminée sur la base de la formule mathématique suivante :

$$P\{Nphotons(N,\ \ D,\ \ P_{Tx},\ \ Channel\_Model)\ \ =\ \ 1\}\ \ >$$

$$Threshold,$$

où $D$ désigne la distance de confiance, $P_{Tx}$ désigne la puissance d'émission, $N$ désigne le nombre de photons émis avec la puissance d'émission $P_{Tx}$, $Channel\_Model$ désigne un modèle de canal prédéfini supposé pour le canal d'émission et les pertes de canal de modélisation pendant la propagation de photons, $Nphotons$ désigne une fonction fournissant le nombre de photons présents à la distance de confiance $D$ à partir de l'émetteur (31) sur la base du nombre de photons émis $N$, de la distance de confiance $D$, de la puissance d'émission $P_{Tx}$ et du modèle de canal prédéfini $Channel\_Model$, $P$ désigne la probabilité que la fonction $Nphotons$ soit égale à un, et $Threshold$ désigne un seuil prédéfini.

5. Système d'émission de distribution quantique de clés selon la revendication 3 ou 4, dans lequel la surveillance continue de la zone de confiance (23, 33) ou de la zone autour de l'émetteur (31) est réalisée au moyen d'un ou plusieurs capteurs et/ou sur la base d'une surveillance de la Terre.

6. Système d'émission de distribution quantique de clés selon l'une quelconque des revendications 3 à 5, dans lequel l'émetteur (31) est configuré pour arrêter d'émettre l'impulsion multiphotonique si une menace potentielle pour la sécurité de la zone de confiance (23, 33) est détectée sur la base de la surveillance continue.

7. Système d'émission de distribution quantique de clés selon la revendication 6, dans lequel l'émetteur (31) est configuré pour, s'il arrête d'émettre en raison d'une menace potentielle détectée, réaliser les étapes a), b) et c) ou d) en déterminant une distance de confiance (D) différente.

8. Système d'émission de distribution quantique de clés selon l'une quelconque des revendications précédentes, dans lequel ledit système d'émission de distribution quantique de clés est intégré dans un système de communication spatial ou satellitaire ou terrestre ou espace/satellite-terre.

9. Système d'émission configuré comme l'émetteur (31) du système d'émission de distribution quantique de clés (2, 3) selon une quelconque revendication précédente.

10. Méthode pour l'émission de distribution quantique de clés (QKD) depuis un émetteur (31) vers un récepteur (32), comprenant l'émission, par l'émetteur (31), d'une impulsion multiphotonique vers le récepteur (32) à travers une zone de confiance (23, 33) qui s'étend depuis l'émetteur (31) vers le récepteur (32) jusqu'à une distance de confiance (D) à partir de l'émetteur (31) ; dans laquelle l'émission comprend l'émission de l'impulsion multiphotonique avec une puissance d'émission telle qu'une impulsion monophotonique se propage hors de la zone de confiance (23, 33) jusqu'à atteindre le récepteur (32).

11. Méthode selon la revendication 10, comprenant :

   a) la détermination de la distance de confiance (D), définissant ainsi une taille d'une zone de confiance ;
   b) l'évaluation de la sécurité de la zone de confiance (23, 33) ;
   c) si la zone de confiance (23, 33) est sûre,

       i. la détermination d'une puissance d'émission telle que, par l'émission d'une impulsion multiphotonique avec ladite puissance d'émission par l'émetteur (31), une impulsion monophotonique se propage hors de la zone de confiance (23, 33) jusqu'à atteindre le récepteur (32), et
       ii. l'émission, par l'émetteur (31), d'une impulsion multiphotonique avec la puissance d'émission déterminée ;

   d) si la zone de confiance (23, 33) n'est pas sûre, la réalisation des étapes a), b) et c) ou d) en déterminant une distance de confiance (D) différente.

12. Méthode selon la revendication 11, dans laquelle :

   • la distance de confiance (D) est déterminée sur la base d'exigences de priorité et de performance liées à un service de chiffrement demandé, et, optionnellement, également d'une classe de service dudit service de chiffrement ;
   • la sécurité de la zone de confiance (23, 33) est évaluée sur la base d'une surveillance continue de la zone de confiance (23, 33) ou d'une zone autour de l'émetteur (31) ;
   • la puissance d'émission est déterminée de sorte que la propagation de N photons émis à travers la zone de confiance (23, 33) conduise statistiquement à un nombre de photons égal à un à la distance de confiance (D) avec une probabilité supérieure à un seuil prédéfini, N étant un entier positif supérieur à un ;
   • l'impulsion multiphotonique émise transporte les N photons.

13. Méthode selon la revendication 12, dans laquelle la puissance d'émission est déterminée sur la base de la formule mathématique suivante :

$$P\{Nphotons(N, \ D, \ P_{Tx}, \ Channel\_Model) \ = \ 1\} \ >$$

$$Threshold,$$

où $D$ désigne la distance de confiance, $P_{Tx}$ désigne la puissance d'émission, $N$ désigne le nombre de photons émis avec la puissance d'émission $P_{Tx}$, $Channel\_Model$ désigne un modèle de canal prédéfini supposé pour le canal d'émission et les pertes de canal de modélisation pendant la propagation de photons, $Nphotons$ désigne une fonction fournissant le nombre de photons présents à la distance de confiance $D$ à partir de l'émetteur (31) sur la base du nombre de photons émis N, de la distance de confiance $D,$ de la puissance d'émission $P_{Tx}$ et du modèle de canal prédéfini $Channel\_Model, P$ désigne la probabilité que la fonction $Nphotons$ soit égale à un, et $Threshold$ désigne un seuil prédéfini.

14. Méthode selon la revendication 12 ou 13, dans laquelle la surveillance continue de la zone de confiance (23, 33) ou de la zone autour de l'émetteur (31) est réalisée au moyen d'un ou plusieurs capteurs et/ou sur la base d'une surveillance de la Terre.

**15.** Méthode selon l'une quelconque des revendications 12 à 14, comprenant en outre l'arrêt de l'émission de l'impulsion multiphotonique si une menace potentielle pour la sécurité de la zone de confiance (23, 33) est détectée sur la base de la surveillance continue.

**16.** Méthode selon la revendication 15, comprenant en outre, si l'émission de l'impulsion multiphotonique est arrêtée en raison d'une menace potentielle détectée, la réalisation des étapes a), b) et c) ou d) en déterminant une distance de confiance (D) différente.

| Alice's bit sequence | 1 | 0 | 1 | 1 | 0 | 0 | 1 | 1 | 0 | 0 | 1 | 1 | 1 | 0 |
| Bob's detection basis | + | x | + | + | x | x | + | + | x | + | x | x | + | + |
| Bob's measurement | 1 | 0 | 0 | 1 | 0 | 0 | 1 | 1 | 0 | 0 | 0 | 1 | 0 | 0 |
| Retained bit sequence | 1 | - | - | 1 | 0 | 0 | - | 1 | 0 | 0 | - | 1 | - | 0 |

FIG. 1

FIG. 2

FIG. 3

FIG. 4

FIG. 5

FIG. 6

FIG. 7

311

31

QKD Transmitter (User 1)

Trusted area
evaluation module

Sensors Input
(not mandatory)

312

Transmission
power
determination
module

Control Signal

314

313

Multiphoton pulse
transmission
module

Controlled Optical
Attenuator

Channel

32

User 2

QKD Receiver

FIG. 8

51

52

Alice (transmitter)

Bob (receiver)

Laser
source

512

Fiber (quantum channel)

Measurement
first basis

0,1

0,1

511

Optical
attenuator

53

Beam
splitter
50%

Measurement
second basis

521

Single Photon Transmission

FIG. 9

Regional Trusted Area

Company Trusted Area

City Trusted Area

National Trusted Area

D

Multi-Photon Transmission    Single Photon Transmission

Optical Fiber

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102023000024831
- US 9294191 B2
- US 7831050 B2
- US 10348493 B2
- US 7502476 B1

**Non-patent literature cited in the description**

- **C. H. BENNETT** ; **G. BRASSARD**. *International Conference on Computers, Systems & Signal Processing, Bangalore, India*, 09 December 1984, 175-17
- **GRÜNENFELDER, FADRI et al.** Simple and high-speed polarization-based QKD. *Applied Physics Letters*, 2018, vol. 112 (5), 051108
- **BENNETT, CHARLES H.** Quantum cryptography using any two nonorthogonal states. *Physical review letters*, 1992, vol. 68 (21), 2121
- **BENNETT, CHARLES H.** ; **GILLES BRASSARD** ; **N. DAVID MERMIN**. Quantum cryptography without Bell's theorem. *Physical review letters*, 1992, vol. 68 (5), 557
- **X. LIU**. *Twin-Field Quantum Key Distribution Protocol with Heralded Single-Photon Source*
- **B. DARUNKAR**. *Secure satellite communication using multi-photon tolerant quantum communication protocol*